(19) Europäisches Patentamt European Patent Office Office européen des brevets

(11) **EP 3 767 501 A1**

(12) **EUROPEAN PATENT APPLICATION**

(43) Date of publication:
20.01.2021 Bulletin 2021/03

(51) Int Cl.:
**G06F 21/34** (2013.01) **G06F 21/40** (2013.01)
**G06F 21/33** (2013.01)

(21) Application number: **19305952.4**

(22) Date of filing: **18.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hewlett-Packard Development Company, L.P.**
**Spring TX 77389 (US)**

(72) Inventors:
- **Schiffman, Joshua**
  **Bristol, Bristol BS1 6NP (GB)**
- **Laing, Thalia**
  **Bristol, Bristol BS1 6NP (GB)**
- **Balacheff, Boris**
  **92100 Boulogne-Billancourt (FR)**
- **Wattiau, Gaetan**
  **Bristol, Bristol BS1 6NP (GB)**

(74) Representative: **Bryers LLP**
**7 Gay Street**
**Bath, Bath and North East Somerset BA1 2PH (GB)**

(54) **USER AUTHENTICATION**

(57) In an example there is provided a method of authenticating a user. An authentication challenge is received in response to a request to authenticate a user. The challenge is distributed to each device from a subset of a set of registered devices. At each device a share of an authentication token is accessed and a partial response to the challenge is generated based on an authentication token and challenge. A response to the challenge is generated by combining the partial responses from the subset of devices, and is communicated to an authenticator. The user is authenticated when the subset of devices is an authorised subset. Every authorised subset of the set of registered devices comprises at least one device from the first group of devices.

Figure 1A

EP 3 767 501 A1

**Description**

BACKGROUND

Authentication systems are ubiquitous in business and commercial environments. Authentication is a process that verifies the claimed identity of an entity. Once a system has verified a user's identity the user can be granted access to services or data. Authentication systems use authentication factors to determine a user's identity. An authentication factor may be something the user knows, something the user possesses, or an attribute of the user. The authentication factor can depend on possession of devices such as phones or laptops. In some cases, multiple devices may participate in the authentication of a user.

BRIEF DESCRIPTION OF THE DRAWINGS

Figure 1A is a schematic diagram showing an authentication system, according to an example.

Figure 1B is a schematic diagram showing an authentication system, according to an example.

Figure 2 is a block diagram showing a method of authenticating a user according to an example.

Figure 3 shows a processor associated with a memory comprising instructions for authenticating a user on a computing device.

DETAILED DESCRIPTION

In the following description, for purposes of explanation, numerous specific details of certain examples are set forth. Reference in the specification to "an example" or similar language means that a particular feature, structure, or characteristic described in connection with the example is included in at least that one example, but not necessarily in other examples.

Authentication is used to establish the identity of an entity. Authentication is used in a variety of contexts such as to allow a user to gain access to services or data. Users can authenticate themselves to a local device or a server remote from the user over a network.

To authenticate, a user is asked to present an authentication factor. An authentication factor may be 'something you are', 'something you know', or 'something you have'. For example, a user may be authenticated if they can demonstrate possession of an identification card. In another case, a user may be authenticated if they know a password.

Due to the weaknesses of passwords, many authentication schemes rely on the user having access to a device. This is an improvement over a password as the device, unlike a human, can store a cryptographically secure password and can use public key cryptography.

When the user wants to authenticate, an authenticating party, also referred to as the relying party, will send the device a challenge. The challenge is signed by the device using the private key corresponding to a previously enrolled public key. A valid signature shows the relying party that someone with access to the device wants to authenticate i.e., the user is in possession of the device. The relying party doesn't learn the private key and so cannot leak information about the key if compromised at a later date. In particular, possession of the authentication factor can be demonstrated without revealing secure information relating to the authentication factor.

Authentication systems which rely on a user having a device have several security and usability flaws. For example, if an attacker steals the device, the attacker can impersonate the user using the authentication factor on the device. If the authentication device is lost, there may be no secure method for the user to recover access to their account. If the device is physically attacked or the software is compromised the device may wrongly or falsely authenticate or leak information. If the user doesn't have access to the single device momentarily, they may be locked out of their account until they can regain access. Finally, by using a single device to authenticate, the user is relying on the availability and trustworthiness of the single device.

In some authentication procedures, an authentication factor is distributed across multiple devices. When the user is asked to authenticate themselves, they demonstrate possession of a subset of devices across which the authentication factor is distributed. If the combined information from the subset of devices is sufficient to demonstrate possession of the authentication factor, then the user is authenticated.

In these authentication systems, different subsets of devices may be presentable to demonstrate possession of the authentication factor. For example, in some systems if a user can present a threshold number of devices from a set of devices across which the authentication factor is distributed, then the user may be authenticated. A threshold may be any subset of n/2 devices out of a total of n devices. Any such subset n/2 of the n devices may be sufficient to authenticate the user.

Distributing an authentication factor across multiple devices increases security and usability of a system. In these systems, an adversary has to obtain a number of different devices to imitate the authorised user. If a device is lost, corrupted, or damaged, or is locked out to a user, they can still authenticate by presenting a different subset of devices in their possession when it is time to authenticate.

Authentication systems of this kind use different user devices to authenticate. This includes devices which the user has in their possession such as a computing device, tablet, phone, smart watch etc. Such devices have the requisite capabilities to store information relating to authentication securely.

Unfortunately requiring that the user possesses a certain number or type of device restricts the usability of the authentication system. To participate in the protocol the user has a certain number of registered devices which belong to them. They then present a suitable subset of their devices at the time of authentication. This can be problematic in situations where, for example, a user is not allowed to carry items such as phones or computing devices. Moreover, some users do not possess or regularly carry a sufficient number of devices on them with the capability to participate in the protocol.

The methods and systems described herein extend the capability of authentication systems using multiple devices. In an example, the methods described allow a user to register devices which are not directly in the possession of the user, such that those devices may participate in authenticating of the user.

The methods described herein allow a user to specify which devices may participate from a list of potential devices. Devices may include devices such as smart lightbulbs or printers which are in the vicinity of the user. The system is arranged such that the devices which are registered to participate, but which are not in the user's possession, cannot collaborate independently to authenticate when the user has not initiated the authentication session.

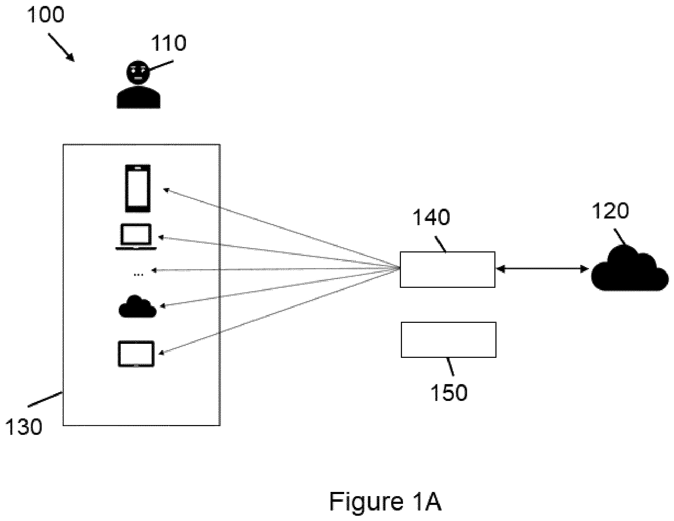

Figures 1A is schematic diagrams showing an authentication system 100 according to an example. The system 100 shown in Figure 1A may be used to in conjunction with the other methods and systems described herein.

The authentication system 100 shown in Figure 1A is used to authenticate a user 110. The user 110 wishes to authenticate themselves to gain access to a service or data, for example. The authentication system 100 comprises a relying party 120. The relying party 120 is the service the user 110 wishes to authenticate to. In examples described herein the relying party 120 may be a local device or computing system. In other cases, the relying party 120 is a remote server, a networked device, or similar.

The authentication system 100 shown in Figure 1A, comprises a number of physical devices 130. The devices 130 may be devices which belong to the user 110. In other examples the devices 130 are physical devices that do not belong to the user but which the user has access to or is in the vicinity of. For example, one of the devices 130 may be a printer in the user's office which the user does not own. In other examples, the devices 130 may include online services that the user may have access to. All of the devices 130 are registered to participate in the authentication of the user according to examples.

In the examples described herein, the relying party 120 may send a challenge, or similar, to the user 110. The challenge is singed by the devices 130 in a manner to be described. The relying party 120 is responsible for verifying the user's authentication attempt.

The system 100 further comprises a distributor 140. The distributor 140 is a logical entity, such as a computing device, that is arranged to forward the challenge, if one is sent, from the relying party 120 to each of the available devices 130, as indicated by the arrows in Figure 1A.

In Figure 1A the distributor 140 is shown as being a separate entity from the devices 130. In examples described herein the distributor may be one of the devices 130 that are registered by the user 110. According to other examples, the distributor 140 may be implemented by the relying party 120.

The system 100 further comprises a combiner 150. The combiner 150 is a logical entity that is responsible for taking as input the partial authentications from a subset of devices 130 and outputting a 'whole' authentication. The combiner 150 co-ordinates this process and is responsible for the necessary communications between parties involved in the authentication procedure.

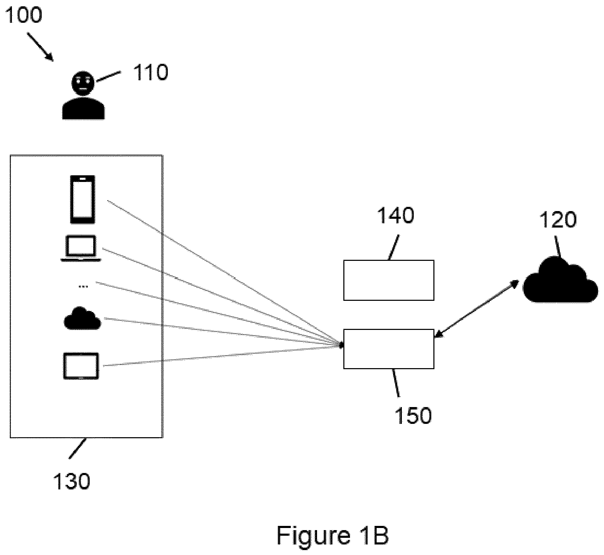

Figures 1B is a schematic diagram showing the same authentication system 100, according to an example. In Figure 1B the combiner 150 communicates to each device in the subset of registered devices 130 to receive the partial authentications. The combiner 150 then communicates the full authenticating data to the relying party to authenticate the user 110.

Before any user authentication takes place, the user 110 chooses which devices they would like to participate in the authentication protocol. Let $\mathcal{D} = \{d_1, d_2, ..., d_n\}$ denote the set of selected devices 130. For the relying party 120, the user 110 then defines an access structure $\Gamma$. An access structure is a set consisting of all subsets of $\mathcal{D}$ which the user wishes to be authorised to act on behalf of the full set of devices. If the user 110 can present an authorised subset of devices *i.e.* a set in Γ, the user 110 is successfully authenticated.

According to examples described herein, the access structure Γ may consist of all subsets of $\mathcal{D}$ which contain *t* or more devices, where *t* is a constant threshold number less than the total number of devices. This threshold may be *n/2,* for example. In some examples, the user 110 may be presented with a number of options for an access structure on $\mathcal{D}$ from which they can choose, instead of selecting subsets to determine the access structure themselves.

The access structure Γ may be different for distinct relying parties 120, to which the user wishes to authenticate themselves. For example, for the set of devices $\mathcal{D} = \{phone, laptop, watch, tablet\}$ a first access structure may comprise

$$\Gamma_1 = \big\{ \{phone, laptop\}, \{laptop, watch\}, \{laptop, tablet\}, \{phone, watch, tablet\} \big\}$$

For this access structure the user 110 demonstrates possession of either their: (1) phone and laptop, (2) laptop and watch, (3) laptop and tablet, or (4) phone, watch and tablet, in order to authenticate to the relying party 120.

For a second relying party for the set of devices $\mathcal{D} = \{phone, laptop, watch, tablet\}$ the access structure $\Gamma_2$ may consist of subsets of size 3 or greater, i.e.

$$\Gamma_2 = \big\{ \{phone, laptop, watch\}, \{phone, watch,$$

$$tablet\}, \{laptop, watch, tablet\}, \{phone, laptop, watch, tablet\} \big\}$$

That is to say, $\Gamma_2$ is a threshold access structure with *t* = 3.

The methods and systems described herein may be implemented with monotonic access structures. Monotonic access structures are access structures with the property that any superset of the set satisfying the access structure satisfies the access structure. Threshold access structures are therefore an example of monotonic access structures.

In addition to monotonic access structures, the methods and systems described herein are implemented on access structures where the set of devices that are registered by the user consists of at least a first and second group of devices, such that every authorised subset of the set of registered devices, according to the access structure, comprises at least one device from the first group of devices. For example, a first group of devices may comprise devices that are owned by the user, and a second group may comprise devices which are not owned by the user, but are still able to participate in the authentication of the user. This means that a subset of devices consisting of devices from just the second group of devices is never an authorised subset.

As an example, a set of registered devices consists of:

$$\mathcal{D} = \{phone, laptop, watch, tablet, printer\}$$

In this set, the printer does not belong to the user. If the first group of devices consists of user devices and the second group of devices consists of non-user devices, then an access structure such as the threshold access structure, where the authorised subsets are subsets of at least two devices, will satisfy the requirement described. In some examples, the first or second group of devices may comprise one or more further subgroups or a nested hierarchical group of devices.

Once the user 110 has selected the devices they wish to use and defined an access structure for the relying party 120, the user 110 then registers with the relying party 120. Registering the user 110 with the relying party 120 could depend on a number of factors, including the privacy requirements of the user 110 or the capabilities of the relying party 120.

For example, the user 110 may register every device the user 110 selected to participate as well as the access structure. Alternatively, the user 110 may just register a collection of devices 110 belonging to the user, so the relying party 120 is not aware of which devices 130 are involved in or responsible for authentication; here, the collection may look like a single device to the relying party 120.

During the registration process, the user's authentication token, such as a private key from a public/private key pair, is distributed amongst the devices 130. This distribution is carried out in such a way that an authorised subset of devices 130 (and only an authorised subset) can present the authentication token, or proof of ownership of the authentication token, to the relying party 120.

This distribution of the authentication token may be achieved in a number of ways. For example, the user 110 or an external device may insert 'shares' of the authentication token to each device 130 in the subset of devices $\mathcal{D}$ ; by one device in $\mathcal{D}$ sending shares to the other devices 130, by the devices 130 collaborating and deciding the shares together in a secure manner such that they do not learn each other's shares, and no single device learns the authentication token; or by the relying party 120 sending shares to the devices 130.

Once the access structure has been defined and the user 110 has enrolled with the relying party 120, the user 110 authenticates by presenting an authorised set of devices.

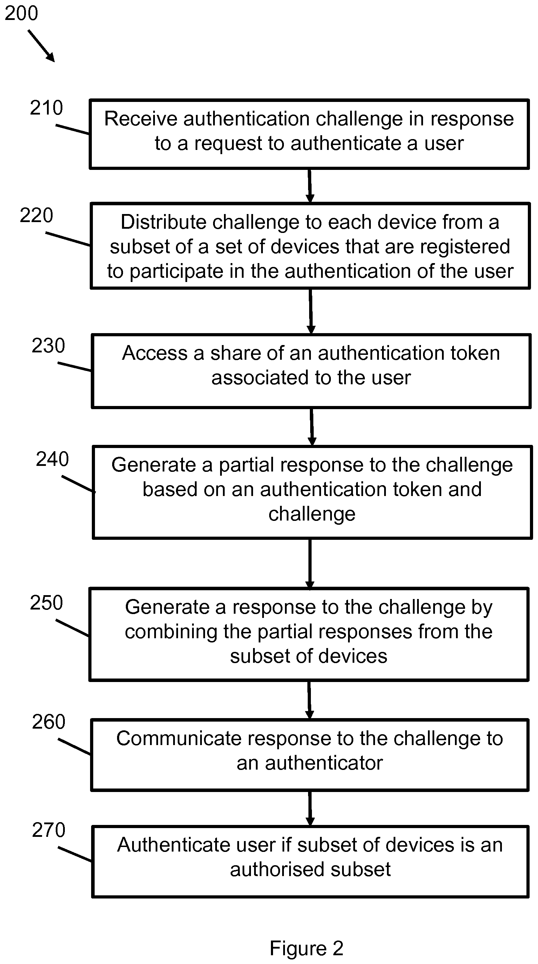

Figure 2 is a block diagram showing a method 200 of authenticating a user according to an example. The method 200 shown in Figure 2 may be implemented on the system 100 shown in Figure 1 to authenticate user 110 to the relying party 120.

In the method 200 shown in Figure 2, it is assumed that there is a set of devices that are registered to participate in the authentication of the user and that the devices have access to a share of an authentication token. In other words, the previously described set up process has already occurred and there is an access structure defined on the set of devices, as selected or defined by the user. In particular, the set of registered devices comprises first and second groups of devices, such that every authorised subset of devices in the access structure comprises at least one device from the first group of devices.

At block 210, an authentication challenge is received in response to a request to authenticate a user, such as user 110 shown in Figure 1A. The authentication challenge may be randomly generated by the relying party 120 when the method 200 is implemented on the system 100 shown in Figure 1.

At block 220 the authentication challenge is distributed to the devices. This is performed by the distributor 140. According to examples described herein the distributor may be a registered device of the devices 130. In that case, the relying party 120 communicates the challenge to this device which distributes the challenge to the other registered devices 130. In other examples, block 220 is implemented by the relying party 120. In that case the challenge is distributed directly to the devices 130. In a further example, a dedicated distributor device may be used to distribute the challenge.

At block 230 at each device, a share of an authentication token associated to the user is accessed. The share is accessed in response to the device being asked to authenticate the user. In an example, the device may be prompted to access the share on the basis of an instruction from another device that controls the management of shares.

At block 240, a partial response to the challenge is generated on the basis of the authentication token and challenge. The partial response may be computed at the device. According to examples, a partial response may comprise computing one or more cryptographic functions with the challenge and the share of the authentication token in the devices' possession.

At block 250, a response to the challenge is generated by combining the partial responses from the subset of devices. According to examples, this block may be implemented on the combiner 150 when the method 200 is implemented on the system 100 shown in Figures 1A and 1B.

A number of variations of the architecture in relation to the combiner 150 are possible. In one case, the combiner 150 may be implemented on the side of the user. In this case, one of the devices 130 registered by the user acts as the combiner. The partial responses from each of the devices in the subset of the devices that the user is using to authenticate, are communicated to the designated combiner device in the subset of devices 130. The designated device combines the partial responses to generate a response to the challenge.

This architecture may be implemented in a star network with the combiner device at the centre, or in a more fully connected network. According to examples, the combining device is not necessarily fixed and may vary from one authentication session to the next.

In a second example, the relying party 120 acts as a combiner for the devices 130. Each of the devices in the subset each interact individually with the relying party 130 and each one communicates a partial response to the challenge to the relying party 130. The relying party is arranged to generate the full response to the challenge by combining the partial response.

In a third example, the role of the combiner is distributed amongst the devices 130. The devices 130 may coordinate and collectively combine partial responses into a complete authentication. Rather than one device taking responsibility, the devices in the subset work collaboratively to communally authenticate the user. This variation may be implemented using a distributed ledger, for example.

In addition to the three described architectures, further architectures may be defined. For example, a mixed architecture may be used, in which some devices collaborate and others do not collaborate. In other cases, different combiner architectures are implemented between authentication sessions and with different kinds of relying parties.

If a user-side combiner where a single device in the set of registered devices 130 is used, this allows for a single authentication protocol flow to the relying party 120 and gives the user the ability to control which devices participate in the scheme. Moreover, this can hide which devices participated in the protocol from the relying party. In particular, this maximises the privacy of the user 110.

In contrast, the relying party-side combiner involves multiple authentication flows between the relying party 120 and the subset of contributing devices 130. This gives the relying party a higher level of visibility into which devices are participating in the user authentication. This may be advantageous in certain scenarios. For example, in a case where certain kinds of devices are permitted for use in user authentication and other devices are not permitted, the relying party may be able to perform a determination of whether the set of devices comprises a permitted set. The user 110 is still in control of whether a device participates in the protocol.

At block 260, the response to the challenge is communicated to an authenticator. As described, with respect to the different architectures, the response is generated on the basis of the partial responses of the devices within the subsets. In some cases, the full response to the challenge is generated by the relying party 120 itself, having already received partial responses to the challenge.

At block 270, the user is authenticated when it is determined that the subset of devices is an authorised subset. In relation to the system 100 shown in Figure 1, determining whether the subset is an authorised subset is performed at the relying party 120. In some examples, such a determination is implicit: if the partial responses are sufficient to generate a response which verifies in say, a cryptographic signature scheme, the subset of devices is an authorised subset of the access structures, otherwise the response would not have verified successfully. This is because the underlying mathematical structure of such a cryptographic signature scheme determines the authorised subsets of the access structure: combining the shares according to the scheme when the shares are taken from an authorised subset generates a verifiable response.

Authenticating the user depends on the nature of the underlying cryptographic primitive which is implemented. This may involve the relying party 120 combining partial signatures to produce a group signature and subsequently verifying the group signature, verifying a multisignature that is received from a combiner device, or verifying individual signatures and checking them against an access structure.

The methods and systems described herein provide a secure and flexible user authentication system. User authentication is an integral mechanism to securing a device: a user may have to authenticate to a laptop before they login, or a user may need to authenticate to a printer before they release a print job. In another case the user may have to authenticate to an online service. In that case a printer may be used in conjunction with a laptop in the authentication of the user. The methods and systems described minimise the burden of user authentication to the user and increases flexibility to include other devices in the user's vicinity to authenticate the user, whilst maintaining and improving security.

Multi-device authentication methods suffer from heavy reliance on the user owning or being able to present a number of devices at the time of authentication. The methods and systems described alleviate these problems by generalising the notion of device in the protocol to include devices which are not explicitly in the user's possession. The system does not compromise security because these "non user" devices are not able to collaborate to imitate a real user. Hence, the methods and systems provide the maximum flexibility while maintaining security of users.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine-readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode.

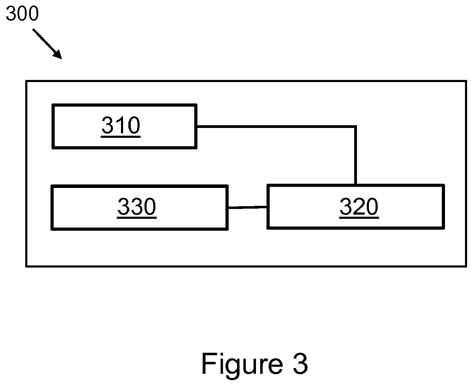

For example, the instructions may be provided on a non-transitory computer readable storage medium encoded with instructions, executable by a processor. Figure 3 shows an example of a processor 310 associated with a memory 320. The memory 320 comprises computer readable instructions 330 which are executable by the processor 310.

The instructions 330 access an authentication challenge in response to a request to authenticate a user; send the challenge to each device from a subset of a set of devices that are registered to participate in the authentication of the user; receive a partial response to the challenge from each device, based on an authentication factor associated to the device; generate a full authentication response to the challenge by combining the partial authentication responses from the subset of devices; and communicate the challenge to an authenticating entity for authentication. The set of registered devices comprises first and second groups of devices, such that every authorised subset of the set of registered devices comprises at least one device from the first group of devices.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the present disclosure. In particular, a feature or block from one example may be combined with or substituted by a feature/block of another example.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A method of authenticating a user, comprising:

   receiving an authentication challenge in response to a request to authenticate a user;
   distributing the challenge to each device from a subset of a set of devices that are registered to participate in the authentication of the user, and, at each device:

   accessing a share of an authentication token associated to the user; and
   generating a partial response to the challenge based on an authentication token and challenge;

   generating a response to the challenge by combining the partial responses from the subset of devices;
   communicating the response to the challenge to an authenticator; and
   authenticating the user when the subset of devices is an authorised subset,
   wherein the set of registered devices comprises first and second groups of devices, such that every authorised subset of the set of registered devices comprises at least one device from the first group of devices.

2. The method of claim 1, comprising registering a device as a member of the set of registered devices to participate in the authentication of the user.

3. The method of claim 2, wherein registering the device comprises specifying whether the device is in the first group or second group of devices.

4. The method of claim 1, wherein the first group of devices comprises devices associated to the user.

5. The method of claim 1, wherein an authorised subset is a qualified subset in an access structure associated to the set of registered devices.

6. The method of claim 5, wherein the access structure is a threshold access structure.

7. The method of claim 1, wherein generating a response comprises:

   communicating the partial responses to a designated device in the subset of devices; and
   combining the partial responses to generate a response to the challenge at the designated device.

8. The method of claim 1, wherein generating a response comprises:

   communicating the partial responses to the authenticator; and
   combining the partial response to generate a response to the challenge at the authenticator.

9. The method of claim 1, wherein generating a response to the challenge comprises at least a first and second device collaborating to combine the partial responses from the subset of devices.

10. An apparatus for authenticating a user, comprising:

    a share distributor arranged to:

       generate share data on the basis of an authentication challenge received from an authenticating entity;
       communicate the share data to a plurality of registered devices that are registered to participate in an authentication protocol; and

    a share combiner arranged to:

       receive response data to the challenge, generated on the basis of the share data, from a subset of the registered devices; and
       combine response data to generate a response to the authentication challenge;

    wherein the response authenticates the user when the subset is an authorised subset of the registered devices; and
    wherein the registered devices comprise first and second groups of devices, such that every authorised subset of the set of registered devices comprises at least one device from the first group of devices.

11. The apparatus of claim 10, wherein the share distributor and/or share combiner is a registered device.

12. The apparatus of claim 11, wherein the share distributor and/or share combiner is the authenticating entity.

13. The apparatus of claim 10, wherein the share combiner is distributed across a subset of the registered device.

14. The apparatus of claim 10, wherein the set of authorised subsets are determined according to an access structure.

15. A non-transitory machine-readable storage medium encoded with instructions executable by a processor to:

    access an authentication challenge in response to a request to authenticate a user;
    send the challenge to each device from a subset of a set of devices that are registered to participate in the authentication of the user;
    receive a partial response to the challenge from each device, based on an authentication factor associated to the device;
    generate a full authentication response to the challenge by combining the partial authentication responses from the subset of devices; and
    communicate the challenge to an authenticating entity for authentication;
    wherein the set of registered devices comprises first and second groups of devices, such that every authorised subset of the set of registered devices comprises at least one device from the first group of devices.

Figure 1A

Figure 1B

200

210 — Receive authentication challenge in response to a request to authenticate a user

220 — Distribute challenge to each device from a subset of a set of devices that are registered to participate in the authentication of the user

230 — Access a share of an authentication token associated to the user

240 — Generate a partial response to the challenge based on an authentication token and challenge

250 — Generate a response to the challenge by combining the partial responses from the subset of devices

260 — Communicate response to the challenge to an authenticator

270 — Authenticate user if subset of devices is an authorised subset

Figure 2

300

Figure 3

**Europäisches Patentamt**
**European Patent Office**
**Office européen des brevets**

# EUROPEAN SEARCH REPORT

Application Number

EP 19 30 5952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/180072 A1 (LIGATTI JARRED ADAM [US] ET AL) 23 June 2016 (2016-06-23)<br>* abstract; figures 3,5 *<br>* paragraph [0006] - paragraph [0011] *<br>* paragraph [0070] *<br>----- | 1-15 | INV.<br>G06F21/34<br>G06F21/40<br>G06F21/33 |
| X | EP 3 316 163 A1 (HEWLETT PACKARD DEVELOPMENT CO [US])<br>2 May 2018 (2018-05-02)<br>* abstract; figures 1-8 *<br>* paragraph [0003] - paragraph [0010] *<br>----- | 1-15 | |
| X | EP 3 379 767 A1 (HEWLETT PACKARD DEVELOPMENT CO [US])<br>26 September 2018 (2018-09-26)<br>* figures 1-5 *<br>* paragraph [0003] - paragraph [0005] *<br>----- | 1-15 | |
| X | US 2016/294562 A1 (OBERHEIDE JON [US] ET AL) 6 October 2016 (2016-10-06)<br>* abstract; figures 1-8 *<br>* paragraph [0014] - paragraph [0016] *<br>----- | 1-15 | **TECHNICAL FIELDS SEARCHED (IPC)**<br><br>G06F |

The present search report has been drawn up for all claims

| Place of search | Date of completion of the search | Examiner |
|---|---|---|
| Munich | 11 December 2019 | Harms, Christoph |

EPO FORM 1503 03.82 (P04C01)

## ANNEX TO THE EUROPEAN SEARCH REPORT
## ON EUROPEAN PATENT APPLICATION NO.

EP 19 30 5952

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2019

| Patent document cited in search report | | Publication date | Patent family member(s) | | Publication date |
|---|---|---|---|---|---|
| US 2016180072 | A1 | 23-06-2016 | CA | 2968051 A1 | 30-06-2016 |
| | | | EP | 3238369 A1 | 01-11-2017 |
| | | | US | 2016180072 A1 | 23-06-2016 |
| | | | WO | 2016105591 A1 | 30-06-2016 |
| EP 3316163 | A1 | 02-05-2018 | EP | 3316163 A1 | 02-05-2018 |
| | | | US | 2018121636 A1 | 03-05-2018 |
| EP 3379767 | A1 | 26-09-2018 | EP | 3379767 A1 | 26-09-2018 |
| | | | US | 2018278594 A1 | 27-09-2018 |
| US 2016294562 | A1 | 06-10-2016 | US | 2016294562 A1 | 06-10-2016 |
| | | | US | 2017195123 A1 | 06-07-2017 |
| | | | US | 2018026796 A1 | 25-01-2018 |
| | | | US | 2018234251 A1 | 16-08-2018 |

EPO FORM P0459

For more details about this annex : see Official Journal of the European Patent Office, No. 12/82